(19)

(11) **EP 3 899 096 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **19832071.5**

(22) Anmeldetag: **18.12.2019**

(51) Internationale Patentklassifikation (IPC):
***C25B 1/04*** *(2021.01)* ***H01M 8/04*** *(2016.01)*
***C25B 15/02*** *(2021.01)*

(52) Gemeinsame Patentklassifikation (CPC):
**C25B 1/04; C25B 15/02; H01M 8/04201; H01M 8/04425; H01M 8/04432; H01M 8/04664; H01M 8/0656; H01M 16/003;** H01M 2250/10; Y02B 90/10; Y02E 60/36; Y02E 60/50

(86) Internationale Anmeldenummer:
**PCT/EP2019/086029**

(87) Internationale Veröffentlichungsnummer:
**WO 2020/127540 (25.06.2020 Gazette 2020/26)**

# (54) ENERGIESYSTEM UND VERFAHREN ZUR LEITUNGSDRUCKÜBERWACHUNG

ENERGY SYSTEM AND METHOD FOR LINE PRESSURE MONITORING

SYSTÈME D'ÉNERGIE ET PROCÉDÉ DE SURVEILLANCE DE PRESSION DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 DE 102018133206**

(43) Veröffentlichungstag der Anmeldung:
**27.10.2021 Patentblatt 2021/43**

(73) Patentinhaber: **HPS Home Power Solutions AG**
**12489 Berlin (DE)**

(72) Erfinder:
- **LEVERENZ, Hendrik**
  **12053 Berlin (DE)**
- **HIERL, Andreas**
  **12526 Berlin (DE)**
- **SCHULTE, Jonas**
  **12103 Berlin (DE)**

(74) Vertreter: **Müller, Thomas**
**Boschetsrieder Straße 20**
**81379 München (DE)**

(56) Entgegenhaltungen:
**DE-A1-102006 059 030 DE-B4-112005 000 673**
**DE-T5-112005 000 362**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 899 096 B1

## Beschreibung

Die vorliegende Erfindung betrifft zunächst ein Verfahren zur Leitungsdrucküberwachung in einem Energiesystem gemäß dem Oberbegriff des unabhängigen Patentanspruchs 1. Weiterhin betrifft die Erfindung auch ein Energiesystem.

Energiesysteme der gattungsgemäßen Art sind im Stand er Technik bereits auf vielfältige Weise bekannt. Mit derartigen Systemen wird üblicherweise Energie für verschiedenste Anwendungsgebiete erzeugt und bereitgestellt.

Bei einer bekannten Art solcher Energiesysteme wird in einer ersten Energiequelle Energie erzeugt. Bei der erzeugten Energie kann es sich beispielsweise um Wasserstoff H2 handeln. Der Wasserstoff wird beispielsweise mittels Elektrolyse erzeugt und in einer zweiten Energiequelleneinrichtung, bei der es sich beispielsweise um eine Speichereinrichtung handelt, gespeichert. Hierbei handelt es sich beispielsweise um eine erste Betriebsweise des Energiesystems. Während des Betriebs des Energiesystems wird der Wasserstoff aus der Speichereinrichtung ausgespeichert und in einer ersten Energiesenkeneinrichtung verbraucht. Hierbei handelt es sich beispielsweise um eine zweite Betriebsweise des Energiesystems. Bei einer solchen ersten Energiesenkeneinrichtung handelt es sich beispielsweise um eine Brennstoffzelleneinrichtung. Üblicherweise sind die vorbeschriebenen Komponenten des Energiesystems räumlich voneinander getrennt und über eine Verbindungsleitungseinrichtung miteinander verbunden. Beide vorgenannten Betriebsweisen bedürfen üblicherweise eines unterschiedlichen Druckniveaus. Während in der ersten Betriebsweise mit der Elektrolyse beispielsweise Drücke von 20 bis 60 bar vorherrschen, sind für den Betrieb der Brennstoffzelleneinrichtung in der zweiten Betriebsweise Drücke von beispielsweise kleiner 20 bar erforderlich.

Aus diesem Grund werden bei bekannten Energiesystemen die verschiedenen Betriebsweisen üblicherweise getrennt voneinander in voneinander getrennten Leitungsabschnitten der Verbindungsleitungseinrichtung durchgeführt. Über erste Leitungsabschnitte der Verbindungsleitungseinrichtung, die allein zum Einspeichern dienen, wird der erzeugte Wasserstoff von der ersten Energiequelleneinrichtung zur zweiten Energiequelleneinrichtung mit dem dabei anstehenden ersten Druck transportiert. Über zweite Leitungsabschnitte der Verbindungsleitungseinrichtung, die allein zum Ausspeichern dienen, wird der in der zweiten Energiequelleneinrichtung gespeicherte Wasserstoff mit dem dafür erforderlichen zweiten Druck zu der ersten Energiesenkeneinrichtung transportiert und dort verbraucht.

Ein solches bekanntes Energiesystem ist beispielsweise in der DE 103 07 112 A1 offenbart. Nachteilig bei diesem bekannten Energiesystem ist, dass die Verbindungsleitungseinrichtung wegen der unterschiedlichen Drücke unterschiedliche Leitungsabschnitte aufweist, die jeweils nur in der ersten Betriebsweise oder in der zweiten Betriebsweise des Energiesystems genutzt werden. Das ist konstruktiv aufwändig und wegen der besonderen Anforderungen an die Leitungen auch teuer. Zudem besteht das Problem, dass es, je mehr Leitungsabschnitte vorhanden sind, auch mehr Leckagen in der Verbindungsleitungseinrichtung geben kann.

Es besteht deshalb das Bedürfnis, die Anzahl der erforderlichen Komponenten im Energiesystem zu verringern.

Grundsätzlich ist es hierzu schon bekannt geworden, bidirektionale Leitungen zu verwenden, die wahlweise in verschiedenen Richtungen durchströmt werden können. Aus der DE 10 2015 209 875 A1 beispielsweise ist ein Energiesystem bekannt, welches auf einem Elektrolyseur und einer Gastherme basiert, wobei das Energiesystem einen bidirektional genutzten Leitungsabschnitt umfasst.

In der eingangs geschilderten Ausgestaltung des Energiesystems befinden sich auf beiden Seiten der bidirektional genutzten Leitung sowohl eine Energiequelleneinrichtung als auch eine Energiesenkeneinrichtung. Kommt es zu einer Kleinst- beziehungsweise Teilleckage während des Betriebs des Energiesystems, das heißt, während Gas von der Energiequelleneinrichtung zu der Energiesenkeneinrichtung fließt, kann das Gas aus der Leckage entweichen. Das ist insbesondere bei Wasserstoff sehr problematisch und gefährlich und muss deshalb verhindert, in jedem Fall schnellstmöglich erkannt werden, damit früherstmöglich Gegenmaßnahmen ergriffen werden können. Eine einfache Grenzdruckunterschreitung reagiert unter Umständen nur sehr langsam und ist deshalb nicht ausreichend. Im schlimmsten Fall führt bei einem Volumenstrom der Leckage, der nach der Formel $\dot{V}_{leakage} < \dot{V}_{Quelle}$ kleiner als der Volumenstrom der Energiequelleneinrichtung ist, und einer Druckmessung an der Energiequelleneinrichtung sogar zu keiner Auslösung einer Grenzdruckunterschreitung.

Der Leitungsdruck muss deshalb überwacht werden. In der DE11 2006 001 772 T5 ist ein Verfahren zur Leitungsdrucküberwachung beschrieben, wobei zur Feststellung von Leckagen in einem Leitungsabschnitt zwei Druckmesseinrichtungen zum Einsatz kommen, die sich räumlich getrennt voneinander in dem Leitungsabschnitt befinden. Eine andere Lösung zur Leitungsdrucküberwachung ist in der DE 11 2005 000673 B4 offenbart. Insbesondere bei bidirektional genutzten Leitungen, bei denen das Volumen in beiden Richtungen durch die bidirektionale Leitung fließt, ist die Überwachung des Leitungsdrucks nicht trivial.

Der vorliegenden Erfindung liegt deshalb die Aufgabe zugrunde, ein Verfahren der eingangs genannten Art derart weiterzubilden sowie ein Energiesystem bereitzustellen, bei dem die genannten Nachteile vermieden werden können. Insbesondere soll eine Möglichkeit für eine sichere Überwachung einer bidirektionalen Leitung geschaffen werden.

Diese Aufgabe wird erfindungsgemäß gelöst durch das Verfahren mit den Merkmalen gemäß dem unabhängigen Patentanspruch 1, welches den ersten Aspekt der Erfindung darstellt, sowie durch das Energiesystem mit den Merkmalen gemäß dem unabhängigen Patentanspruch 10, welches den zweiten Aspekt der Erfindung darstellt. Weitere Merkmale und Details der Erfindung ergeben sich aus den Unteransprüchen, der Beschreibung sowie den Zeichnungen. Dabei gelten Merkmale und Details, die im Zusammenhang mit dem ersten Erfindungsaspekt offenbart sind, vollumfänglich auch im Zusammenhang mit dem zweiten Erfindungsaspekt, und umgekehrt, so dass hinsichtlich der Offenbarung dieser beiden Erfindungsaspekte stets vollinhaltlich auch Bezug auf den jeweils anderen Erfindungsaspekt genommen wird.

Der grundlegende Gedanke der vorliegenden Erfindung besteht in einer besonderen Anordnung von Druckmesseinrichtungen und der Auswertung der von den Druckmesseinrichtungen erfassten Drücken zur sicheren Überwachung einer bidirektionalen Leitung, insbesondere einer bidirektionalen Gasleitung.

Die erfindungsgemäße Lösung stellt eine Leitungsdrucküberwachung bereit, die unabhängig von der Nutzungsrichtung der bidirektionalen Leitung ist. Mit der Erfindung ist zudem eine sensible Leitungsdrucküberwachung in verschiedenen Betriebsweisen beziehungsweise Betriebszuständen des Energiesystems möglich, beispielsweise im Ruhezustand des Energiesystems, in dem der Volumenstrom Null ist, oder im Betrieb des Energiesystems, in dem der Volumenstrom größer Null ist. Die vorliegende Erfindung gestattet zudem auch Plausibilitätsprüfungen durch Redundanz.

Mit der vorliegenden Erfindung lassen sich eine Reihe von Vorteilen realisieren. So kann eine Gefahr bringende Menge an durch eine Leckage austretendem Medium, beispielsweise Wasserstoff, in jedem Betriebszustand minimiert werden, beispielsweise durch eine Druckbegrenzung und eine Reduktion der Reaktionsgeschwindigkeit. Fehler, und insbesondere Leckagen werden unabhängig vom Betriebszustand des Energiesystems mit hoher Sensibilität erkannt.

Die Erfindung ist gerichtet auf ein Verfahren zur Leitungsdrucküberwachung in einem bidirektional genutzten Leitungsabschnitt einer Verbindungsleitungseinrichtung in einem Energiesystem. Das Verfahren läuft in dem Energiesystem ab. Darüber hinaus betrifft die Erfindung auch ein Energiesystem.

Bei dem Energiesystem handelt es sich insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt. Im Folgenden werden diesbezüglich verschiedene bevorzugte Ausführungsbeispiele beschrieben.

In einer bevorzugten Ausführungsform handelt es sich bei dem Energiesystem um ein Hausenergiesystem. Hausenergiesysteme sind grundsätzlich aus dem Stand der Technik bekannt und dienen der Versorgung von Häusern, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Hausenergiesystem schafft die Grundlage dafür, dass der Energiebedarf eines Hauses, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige $CO_2$-Freiheit im Betrieb besteht. Wenigstens aber kann der Strombedarf eines Hauses im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein solches Hausenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Hausenergiesystem der genannten Art die folgenden Grundmerkmale auf:

- einen DC-Einspeisepunkt, bevorzugt ausgebildet für eine Nenn-Spannung von 48 Volt, und/oder einem AC-Einspeisepunkt, bevorzugt ausgebildet für eine Spannung von 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,

- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Hausenergieanlage.

Gemäß dem ersten Erfindungsaspekt wird ein Verfahren bereitgestellt, welches die Merkmale des unabhängigen Patentanspruchs 1 aufweist.

Hierbei handelt es sich um ein Verfahren zur Leitungsdrucküberwachung. Diese Leitungsdrucküberwachung kann aus verschiedenen Gründen erfolgen. Bevorzugt dient die Leitungsdrucküberwachung zur Feststellung von Leckagen in der Leitung. Es können aber auch einfach nur Probleme hinsichtlich des Durchflusses eines Mediums durch die Leitung überwacht und festgestellt werden.

Die Leitungsdrucküberwachung erfolgt erfindungsgemäß in einem bidirektional genutzten Leitungsabschnitt einer Verbindungsleitungseinrichtung in einem wie Energiesystem, insbesondere in einem Hausenergiesystem, bevorzugt in einem wie vorstehend beschriebenen Energiesystem beziehungsweise Hausenergiesystem.

Die Verbindungsleitungseinrichtung weist dabei zumindest einen bidirektional genutzten Leitungsabschnitt auf, wobei sich die einzelnen, nachfolgend näher beschriebenen Komponenten des Energiesystems auf beiden Seiten des bidirektionalen Leitungsabschnitts befinden.

Auf einer ersten Seite des bidirektionalen Leitungsabschnitts befindet sich eine erste Energiequelleneinrichtung. Demgemäß weist das Erfindungssystem zunächst eine erste Energiequelleneinrichtung auf. Die erste Energiequelleneinrichtung ist dazu ausgebildet, eine Energie zu erzeugen oder bereitzustellen. Eine Energiequelleneinrichtung zeichnet sich allgemein gesprochen insbesondere dadurch aus, dass aus ihr mehr hinausfließt als hineinfließt. Die Erzeugung oder Herstellung der Energie kann auf verschiedene Weise erfolgen. Beispielsweise kann die erste Energiequelleneinrichtung als Elektrolyseeinrichtung ausgebildet sein. In bevorzugter Ausgestaltung ist die erste Energiequelleneinrichtung, insbesondere in Form einer Elektrolyseeinrichtung, zur Herstellung von Wasserstoff H2 ausgebildet. Bei der Elektrolyse wird generell mittels elektrischen Stroms eine chemische Reaktion zur Gewinnung oder Herstellung von Stoffen erzwungen. Dabei ist die Erfindung nicht auf dieses konkrete Ausführungsbeispiel beschränkt.

Weiterhin befindet sich auf der ersten Seite des bidirektional genutzten Leitungsabschnitts eine erste Energiesenkeneinrichtung. Eine Energiesenkeneinrichtung zeichnet sich allgemein gesprochen insbesondere dadurch aus, dass in sie mehr hineinfließt als hinausfließt. In einer bevorzugten Ausführungsform handelt es sich bei der ersten Energiesenkeneinrichtung um eine Brennstoffzelleneinrichtung. Brennstoffzelleneinrichtungen an sich sind dem Fachmann geläufig. Allgemein gesprochen wandeln Brennstoffzellen einen zugeführten Brennstoff, beispielsweise Wasserstoff, und ein Oxidationsmittel in elektrische Energie um. Dabei ist die Erfindung nicht auf dieses konkrete Ausführungsbeispiel beschränkt.

Auf der anderen, zweiten Seite des bidirektionalen Leitungsabschnitts befinden sich eine zweite Energiequelleneinrichtung und eine zweite Energiesenkeneinrichtung. Bei der zweiten Energiequelleneinrichtung handelt es sich bevorzugt um eine Speichereinrichtung, insbesondere um eine Hochdruckspeichereinrichtung, in der die in der ersten Energiequelleneinrichtung erzeugte Energie, beispielsweise Wasserstoff, bis zu deren Verwendung, beispielsweise in der ersten Energiesenkeneinrichtung, etwa einer Brennstoffzelleneinrichtung, gespeichert wird. Handelt es sich bei der zweiten Energiequelleneinrichtung um einen Hochdruckspeicher, ist eine Speicherung mit Drücken bis 700 bar bevorzugt. Bei der zweiten Energiesenkeneinrichtung handelt es sich bevorzugt um eine Mitteldruckspeichereinrichtung, insbesondere zur Zwischenspeicherung von Wasserstoff, insbesondere ist in der zweiten Energiesenkeneinrichtung eine Speicherung mit Drücken zwischen 20 und 60 bar bevorzugt. Wird eine solche zweite Energiesenkeneinrichtung verwendet, wird die in der ersten Energiequelleneirichtung erzeugte Energie, beispielsweise Wasserstoff zunächst zu der zweiten Energiesenkeneinrichtung transportiert und dort zwischengespeichert, bevor von dort eine Speicherung in der zweiten Energiequelleneinrichtung, beispielsweise in einer Hochdruckspeichereinrichtung, erfolgt.

Das der vorliegenden Erfindung zugrunde liegende Energiesystem weist eine Verbindungsleitungseinrichtung auf, über die die erste Energiequelleneirichtung mit der zweiten Energiequelleneinrichtung sowie die zweite Energiequelleneinrichtung mit der ersten Energiesenkeneinrichtung miteinander verbunden sind. Die Verbindungsleitungseinrichtung umfasst bevorzugt die Gesamtheit der im Energiesystem vorhanden Leitungsabschnitte. Die Verbindungleitungseinrichtung beziehungsweise deren Leitungsabschnitte sind bevorzugt in Form von Rohrleitungen und/oder Schlauchleitungen ausgebildet. Ein Leitungsabschnitt stellt dabei bevorzugt ein Teilstück der gesamten Verbindungsleitungseinrichtung dar. Im einfachsten Fall weist eine Verbindungsleitungseinrichtung einen einzigen Leitungsabschnitt auf. Bevorzugt ist jedoch vorgesehen, dass die Verbindungsleitungseinrichtung zwei oder mehr Leitungsabschnitte aufweist. Einzelne Leitungsabschnitte können als so genannte unidirektionale Leitungsabschnitte ausgebildet sein, was bedeutet, dass in diesen eine Strömung nur in einer Richtung erfolgt. Erfindungsgemäß sind nunmehr zumindest einzelne Abschnitte der Verbindungsleitungseinrichtung als bidirektionale Leitungsabschnitte ausgebildet. Ein bidirektionaler Leitungsabschnitt ist ein Leitungsabschnitt, der bidirektional, das heißt in zwei Richtungen, genutzt wird. Ein bidirektionaler Leitungsabschnitt zeichnet sich insbesondere dadurch aus, dass dieser wechselseitig genutzt wird und dass im Betrieb des Energiesystems eine Strömung in beiden Richtungen des Leitungsabschnitts erfolgt. Damit kann die Anzahl der benötigten Leitungsabschnitte deutlich reduziert werden.

Zurückkommend auf das weiter oben beschriebene Ausführungsbeispiel mit den zwei Betriebsweisen des Energiesystems ist bei Verwendung von bidirektionalen Leitungsabschnitten beim Wechsel der Betriebsweisen eine Druckänderung, insbesondere eine Druckreduzierung erforderlich, beispielsweise von der ersten Betriebsweise Elektrolyse mit 20 bis 60 bar hin zur zweiten Betriebsweise Brennstoffzellenbetrieb bei kleiner 20 bar.

Das erfindungsgemäße Verfahren ist für eine Überwachung des Leitungsdrucks in dem bidirektionalen, das heißt bidirektional genutzten, Leitungsabschnitt der Verbindungsleitungseinrichtung durch folgende Schritte gekennzeichnet:
Über zwei Druckmesseinrichtungen, die sich räumlich getrennt voneinander in dem bidirektionalen Leitungsabschnitt befinden, wird jeweils ein an den Orten der Druckmesseinrichtungen herrschender erster Druck P1 und ein zweiter Druck P2 erfasst. Der Ort der Druckmessung kann dabei der Ort sein, wo sich die Druckmesseinrichtung in dem bidirektionalen Leitungsabschnitt befindet beziehungsweise angeordnet ist. Oder aber es handelt sich bei dem Ort der Druckmessung um eine Stelle in dem bidirektionalen Leitungsabschnitt, wo die Druckmesseinrichtung den Druck in dem bidirektionalen Leitungsabschnitt ermittelt, beispielsweise misst, abgreift oder bestimmt. Die räumlich getrennten Druckmesseinrichtungen befinden sich bevorzugt jeweils an einem Ende des bidirektionalen Leitungsabschnitts; Das Erfassen des Drucks bedeutet insbesondere, dass die Drücke mittels der Druckmesseinrichtungen direkt gemessen werden. In anderer Ausgestaltung können die Drücke auch erfasst werden, indem diese, insbesondere indirekt; aus bestimmten Parametern, insbesondere Verfahrensparametern, ermittelt, beispielsweise errechnet, werden. Die Erfassung der Drücke kann kontinuierlich erfolgen oder aber in bestimmten Zeitabständen oder Intervallen, gegebenenfalls auch nur bei Bedarf, wenn aus anderen Komponenten des Energiesystems Rückschlüsse darauf gezogen werden, dass etwa eine Leckage vermutet wird. Die Druckmesseinrichtungen sind beispielsweise als Drucksensoren ausgebildet.

Weiterhin weist das erfindungsgemäße Verfahren den Schritt auf, dass eine Überprüfung des Leitungsdrucks in dem bidirektionalen Leitungsabschnitt mittels einer Auswertung der durch die Druckmesseinrichtungen erfassten Drücke, beziehungsweise der erfassten Druckwerte, erfolgt. Das bedeutet, dass die erfassten Drücke in geeigneter Weise analysiert werden. Beispiele hierzu werden im weiteren Verlauf der Beschreibung näher erläutert. Die Auswertung erfolgt in solch einer Weise, dass die erfassten Drücke in Relation zueinander, das heißt insbesondere in eine Beziehung oder in ein Verhältnis zueinander, gesetzt werden. Beispiele hierzu werden im weiteren Verlauf der Beschreibung näher erläutert.

Die Überprüfungsprozedur, und hier insbesondere die Auswertungsprozedur, erfolgt bevorzugt in einer Steuereinrichtung. Bei der Steuereinrichtung kann es sich entweder um eine separate, eigens für diese Leitungsdrucküberwachung eingesetzte Steuereinrichtung handeln. Oder aber die Steuereinrichtung ist Bestandteil der für das Energiesystem eingesetzten Hauptsteuereinrichtung. Die Steuereinrichtung kann durch Hardwarekomponenten, oder aber durch Softwarekomponenten oder aber durch eine Kombination aus Hardware- und Softwarekomponenten gebildet sein. Insbesondere umfasst die Steuereinrichtung eine Prozessoreinrichtung und optional auch eine Speichereinrichtung. Über Schnittstellen, die drahtlos oder drahtgebunden ausgebildet sein können, ist die Steuereinrichtung zumindest zeiteilig mit den Druckmesseinrichtungen verbunden, um von diesen die erfassten Drücke beziehungsweise Druckwerte zu empfangen. Zudem kann die Steuereinrichtung, wie weiter unten noch näher erläutert wird, dazu ausgebildet sein, weitere Komponenten des Energiesystems, wie beispielsweise Ventileinrichtungen und/oder eine Entspannungsvorrichtung und/oder eine Durchflussbegrenzungseinrichtung aufgrund der ausgewerteten Drücke beziehungsweise Druckwerte zu steuern, oder aber zu triggern. Auf diese Weise kann nach einer erfolgten Überprüfung, bei der beispielsweise herauskommt, dass in dem bidirektionalen Leitungsabschnitt eine Leckage vorhanden ist, das Energiesystem so gesteuert werden, dass der Austritt von Medium aus der Leckage, insbesondere von Wasserstoff, unterbunden, zumindest aber reduziert wird.

Wenn sich die Druckmesseinrichtungen jeweils an den Enden des bidirektionalen Leitungsabschnitts befinden, ist das Verfahren bevorzugt durch folgende Schritte gekennzeichnet:

a) über die zwei Druckmesseinrichtungen, die sich räumlich getrennt voneinander an einem ersten Ende und an einem zweiten Ende des bidirektionalen Leitungsabschnitts befinden, werden ein an dem ersten Ende des bidirektionalen Leitungsabschnitts herrschender erster Druck P1 und ein an dem zweiten Ende des bidirektionalen Leitungsabschnitts herrschender zweiter Druck P2 erfasst;

b) die an den beiden Enden des bidirektionalen Leitungsabschnitts erfassten ersten und zweiten Drücke beziehungsweise Druckwerte werden, insbesondere in der Steuereinrichtung des Energiesystems, ausgewertet, indem diese in Relation zueinander gesetzt werden;

c) auf Basis der Auswertung wird der in dem bidirektionalen Leitungsabschnitt herrschende Druck überprüft, insbesondere dahingehend, ob der bidirektionale Leitungsabschnitt eine Leckage aufweist.

Nachfolgend werden verschiedene Auswertungs- und Überprüfungsprozeduren beschrieben, die, insbesondere elektronisch und vorzugsweise automatisch in der Steuereinrichtung, entweder jeweils alleine einzeln für sich, oder aber in beliebiger Kombination durchgeführt werden können.

Gemäß einem ersten Ausführungsbeispiel erfolgt die Auswertung der durch die Druckmesseinrichtungen erfassten Drücke durch eine Grenzdrucküberwachung. Dabei wird/werden der erste Druck P1 und/oder der zweite Druck P2 gegen einen vorgegebenen Grenzdruck verglichen. Insbesondere wird bei diesem Ausführungsbeispiel überprüft, ob der erste Druck P1 und/oder der zweite Druck P2 einen vorgegebenen minimalen Grenzdruck ($P_{min}$) unterschreitet. Dies erfolgt insbesondere nach der Formel

$$P1 \text{ und/oder } P2 < P_{min}.$$

ist keine Leckage in dem bidirektionalen Leitungsabschnitt vorhanden, sind die beiden Drücke P1 und P2 an den jeweiligen Enden des bidirektionalen Leitungsabschnitts bevorzugt gleich hoch. Eine Leckage liegt in dem bidirektionalen Leitungsabschnitt insbesondere dann vor, wenn sich die beiden Drücke P1 und P2 unterscheiden. Somit können bei diesem Ausführungsbeispiel nicht nur die einzelnen Drücke P1 und P2 jeweils gegen einen Grenzdruck verglichen werden, sondern die beiden Drücke P1 und P2 können zusätzlich auch direkt miteinander verglichen werden.

Gemäß einem zweiten Ausführungsbeispiel oder alternativ in Ergänzung zum vorgenannten ersten Ausführungsbeispiel erfolgt die Auswertung der durch die Druckmesseinrichtungen erfassten Drücke durch einen Quervergleich. Dieser Quervergleich sieht vor, dass die erfassten Werte des ersten Drucks P1 und des zweiten Drucks P2 voneinander subtrahiert werden. Dann wird überprüft, wie sich die Differenz der Druckwerte im Vergleich zu einem vorgegebenen Vergleichs-Differenzdruckwert verhält. Beispielsweise kann überprüft werden, ob die Differenz der Druckwerte größer ist als eine vorgegebene maximale Differenz ($P_{delta,max}$). Ist die Differenz größer als die vorgegebene maximale Differenz, deutet dies auf eine Leckage innerhalb des bidirektionalen Leitungsabschnitts hin. Die Überprüfung erfolgt in diesem Fall insbesondere nach der Formel

$$(P1 - P2) > P_{delta,max}.$$

Natürlich kann das Verfahren gemäß dieser Ausführungsform auch andersherum realisiert sein, oder aber es erfolgt eine Überprüfung gegen einen Differenzdruckbereich. Im letztgenannten Fall kann beispielsweise eine Leckage ausgeschlossen werden, wenn die ermittelte Differenz der Druckwerte innerhalb eines vorgegebenen Differenzdruckbereichs liegt.

Gemäß einem dritten Ausführungsbeispiel oder alternativ in Ergänzung zum vorgenannten ersten und/oder zweiten Ausführungsbeispiel erfolgt die Auswertung der durch die Druckmesseinrichtungen erfassten Drücke durch einen Plausibilitätsvergleich. Bei einem Plausibilitätsvergleich werden die erfassten Drücke P1 und P2 und/oder die aus den beiden Drücken gebildete Differenz dahingehend überprüft, ob diese Werte beziehungsweise das Ergebnis überhaupt plausibel, das heißt glaubhaft oder schlüssig, sind. Dieser Plausibilitätsvergleich sieht insbesondere vor, dass die Werte des ersten Drucks P1 und des zweiten Drucks P2 voneinander subtrahiert werden. Dann wird überprüft, wie sich die Differenz der Druckwerte im Vergleich zu einem vorgegebenen Plausibilitäts-Differenzdruckwert verhält. Beispielsweise kann überprüft werden, ob die Differenz der Druckwerte größer ist als eine vorgegebene maximale Differenz ($P_{delta,plausibel}$). Ist die Differenz größer als die vorgegebene maximale Differenz, deutet dies auf eine Leckage innerhalb des bidirektionalen Leitungsabschnitts hin. Die Überprüfung erfolgt in diesem Fall insbesondere nach der Formel

$$(P1 - P2) > P_{delta,plausibel}.$$

Natürlich kann das Verfahren gemäß dieser Ausführungsform auch andersherum realisiert sein, oder aber es erfolgt eine Überprüfung gegen einen Differenzdruckbereich. Im letztgenannten Fall kann beispielsweise eine Leckage ausgeschlossen werden, wenn die ermittelte Differenz der Druckwerte innerhalb eines vorgegebenen Differenzdruckbereichs liegt.

Gemäß einem weiteren bevorzugten Ausführungsbeispiel ist zur Erhöhung der Sensitivität der Leitungsdrucküberwachung während des Überwachungsvorgangs realisiert, dass der Volumenstrom in dem bidirektionalen Leitungsabschnitt reduziert ist. Dies kann beispielsweise durch eine geeignete Durchflussbegrenzungseinrichtung, etwa mittels eines Kapillarrohrs, erreicht werden. In anderer Ausgestaltung wird zur Erhöhung der Sensitivität der Leitungsdrucküberwachung während des Überwachungsvorgangs der Volumenstrom in dem bidirektionalen Leitungsabschnitt eingestellt. Dies kann beispielsweise mittels einer geeigneten Durchflussbegrenzungseinrichtung erfolgen, über die der Volumenstrom der ersten Energiequelleneinrichtung oder je nach Betriebsweise der zweiten Energiequelleneinrichtung eingestellt wird. Die Durchflussbegrenzungseinrichtung kann bevorzugt auch als eine Einrichtung zur Leitungsquerschnittsreduzierung ausgebildet sein. Eine solche Einstellung des Volumenstroms kann beispielsweise auch dann erfolgen, wenn in dem bidirektionalen Leitungsabschnitt eine Leckage erkannt wurde. Dann wird der Volumenstrom bevorzugt zumindest gedrosselt, bis der Fehler behoben wurde.

Das erfindungsgemäße Verfahren kann in verschiedenen Betriebszuständen des Energiesystems durchgeführt werden.

Gemäß einer bevorzugten Ausführungsform wird das Verfahren in einem ersten Betriebszustand des Energiesystem durchgeführt, in dem sich das Energiesystem im Ruhezustand befindet. In diesem Ruhezustand ist der Volumenstrom in dem bidirektionalen Leitungsabschnitt gleich Null. Insbesondere ist im Ruhezustand das Volumen in der Verbindungsleitungseinrichtung minimiert. Die Minimierung des Volumens der Verbindungsleitungseinrichtung erfolgt insbesondere dadurch, dass bestimmte Ventileinrichtungen, bei denen es sich bevorzugt um Sperrventile handelt, geschlossen werden. Hierbei handelt es sich beispielsweise um Ventileinrichtungen vor der ersten Energiequelleneinrichtung und/oder vor der ersten Energiesenkeneinrichtung und/oder vor der zweiten Energiequelleneinrichtung und/oder vor der zweiten Energiesenkeneinrichtung. Durch die vorgenannten Maßnahmen wird die Sensitivität erhöht, was die Genauigkeit des Verfahrens erhöht. Eine Ventileinrichtung ist im Kontext der vorliegenden Patentanmeldung bevorzugt ein Bauelement, welches sich hinter einer Energiequelleneinrichtung befindet.

Gemäß einer anderen bevorzugten Ausführungsform wird das Verfahren in wenigstens einem zweiten Betriebszustand des Energiesystems durchgeführt, in dem sich das Energiesystem im Betriebszustand befindet. Im Betriebszustand ist der Volumenstrom in dem bidirektionalen Leitungsabschnitt größer Null. Wenn das Energiesystem in der wie oben geschilderten Weise ausgebildet ist, kann in einer ersten Alsternative des zweiten Betriebszustands der Wasserstoff hergestellt werden, beispielsweise mittels Elektrolyse. Dieser Betriebszustand wird als Elektrolysebetrieb beschrieben. Im Elektrolysebetrieb strömt der in der ersten Energiequelleneinrichtung erzeugte Wasserstoff über die Verbindungsleitungseinrichtung und insbesondere auch über den bidirektionalen Leitungsabschnitt in Richtung der zweiten Energiequelleneinrichtung, insbesondere in Form einer Hochdruckspeichereinrichtung, wobei der Wasserstoff bevorzugt zuvor in einer zweiten Energiesenkeneinrichtung, insbesondere in Form eines Mitteldruckspeichers, zwischengespeichert wird. In einer zweiten Alternative des zweiten Betriebszustands strömt der Wasserstoff aus der zweiten Energiequelleneinrichtung über die Verbindungsleitungseinrichtung und insbesondere über den bidirektionalen Leitungsabschnitt zu der ersten Energiesenkeneinrichtung in Form einer Brennstoffzelleneinrichtung. Dieser Betriebszustand wird als Brennstoffzellenbetrieb bezeichnet. Leckagen in dem bidirektional genutzten Leitungsabschnitt führen zu einer Druckdifferenz zwischen P1 und P2, da der Druck auf der Seite der Energiequelleneinrichtung langsamer oder gar nicht abfällt. Der Druck auf der Seite der Energiesenkeneinrichtung hingegen fällt ab, da Wasserstoff verbraucht wird und über die Leckage abströmt.

Wenn mit dem Verfahren nach der Überprüfung und Auswertung festgestellt wird, dass der bidirektionale Leitungsabschnitt eine Leckage aufweist, können verschiedene Maßnahmen ergriffen werden. Beispielsweise wird der Volumenstrom in der Verbindungsleitungseinrichtung, insbesondere in dem bidirektionalen Leitungsabschnitt, unterbunden, beispielsweise durch Schließen entsprechender Ventileinrichtungen. In einer anderen Ausführungsform wird der Durchfluss des Volumenstroms in der Verbindungsleitungseinrichtung, insbesondere in dem bidirektionalen Leitungsabschnitt, begrenzt, beispielsweise durch Betätigung einer Durchflussbegrenzungseinrichtung. Im letztgenannten Fall kann insbesondere der Leckage-Volumenstrom bis zur Fehlerbeseitigung reduziert werden. Die für die vorgenannten Maßnahmen erforderlichen Komponenten des Energiesystems können beispielsweise über die weiter oben beschriebene Steuereinrichtung gesteuert, zumindest aber getriggert werden.

Gemäß dem zweiten Aspekt der Erfindung wird ein Energiesystem bereitgestellt, welches die Merkmale des unabhängigen Patentanspruchs 10 aufweist.

Bevorzugt wird das Verfahren des ersten Erfindungsaspekts in dem Energiesystem gemäß dem zweiten Erfindungsaspekt ausgeführt, so dass das Energiesystem Mittel zur Durchführung des Verfahrens gemäß dem ersten Erfindungsaspekt aufweist. Hinsichtlich der Ausgestaltung und Funktionsweise des Energiesystems wird zur Vermeidung von Wiederholungen an dieser Stelle vollinhaltlich auch auf die Ausführungen zum ersten Erfindungsaspekt Bezug genommen und verwiesen.

Das erfindungsgemäße Energiesystem weist eine wie oben beschriebene erste Energiequelleneinrichtung und eine wie oben beschriebene erste Energiesenkeneinrichtung auf, die auf einer ersten Seite eines bidirektional genutzten Leitungsabschnitts einer Verbindungsleitungseinrichtung angeordnet sind. Weiterhin weist das Energiesystem eine wie oben beschriebene zweite Energiequelleneinrichtung und eine wie oben beschriebene zweite Energiesenkeneinrichtung auf, die auf einer zweiten Seite des bidirektional genutzten Leitungsabschnitts der Verbindungsleitungseinrichtung angeordnet sind. Das Energiesystem weist weiterhin zwei Druckmesseinrichtungen auf, die sich räumlich getrennt voneinander in dem bidirektionalen Leitungsabschnitt befinden, vorzugsweise jeweils an den beiden Enden des bidirektionalen Leitungsabschnitts. Die Druckmesseinrichtungen sind derart bereitgestellt, dass sie in der Lage sind, einen an den Orten der Druckmesseinrichtungen herrschenden ersten Druck beziehungsweise Druckwert P1 und einen zweiten Druck beziehungswiese Druckwert P2 zu erfassen. Darüber hinaus weist das Energiesystem auch eine Einrichtung, insbesondere eine Steuereinrichtung, auf, die über jeweils eine Schnittstelle zumindest zeitweilig mit den beiden Druckmesseinrichtungen verbunden ist. Diese Einrichtung ist derart bereitgestellt, dass sie in der Lage ist, die von den Druckmesseinrichtungen erfassten oder ermittelten ersten und zweiten Drücke auszuwerten und auf Basis der Auswertung den Leitungsdruck in dem bidirektionalen Leitungsabschnitt zu überprüfen, insbesondere dahingehend, ob der bidirektionale Leitungsabschnitt eine Leckage aufweist. Die Überprüfung und Auswertung erfolgen dabei bevorzugt in der im Rahmen des erfindungsgemäßen Verfahrens beschriebenen Weise.

Bevorzugt ist, dass die erste Energiequelleneinrichtung als Elektrolyseeinrichtung, insbesondere zur Herstellung von Wasserstoff ausgebildet ist und/oder dass die erste Energiesenkeneinrichtung als Brennstoffzelleneinrichtung ausgebildet ist und/oder dass die zweite Energiequelleneinrichtung als Hochdruckspeichereinrichtung, insbesondre zur Speicherung von Wasserstoff ausgebildet ist und/oder dass die zweite Energiesenkeneinrichtung als Mitteldruckspeichereinrichtung, insbesondere zur Zwischenspeicherung von Wasserstoff ausgebildet ist/sind.

Nachfolgend werden konkret einige der Mittel benannt, die für die Durchführung des Verfahrens bevorzugt genutzt werden. Zu der Funktionsweise dieser Mittel wird deshalb auch auf die entsprechenden Ausführungen zum erfindungsgemäßen Verfahren weiter oben Bezug genommen und verwiesen.

Bevorzugt ist/sind die erste Energiequelleneinrichtung und/oder die erste Energiesenkeneinrichtung über eine Ventileinrichtung, insbesondere über ein Sperrventil, an der Verbindungsleitungseinrichtung angeschlossen. Ein Sperrventil, bei dem es sich beispielsweise um ein Magnetventil handelt, dient insbesondere dazu, einen Volumenstrom abzusperren.

In weiterer bevorzugter Ausgestaltung ist in einem zwischen einem zweiten Ende des bidirektionalen Leitungsabschnitts und der zweiten Energiesenkeneinrichtung verlaufenden Leitungsabschnitt der Verbindungsleitungseinrichtung eine Ventileinrichtung, insbesondere in Form einer Rückschlagventileinrichtung, angeordnet. Mittels der Rückschlagventileinrichtung wird der damit verbundene Leitungsabschnitt der Verbindungsleitungseinrichtung in einer Richtung strömungstechnisch geschlossen, während der Leitungsabschnitt in der anderen Richtung strömungstechnisch freigegeben, das heißt offen, bleibt. Die Rückschlagventileinrichtung ermöglicht insbesondere, dass in der Verbindungsleitungseinrichtung befindliches Volumen in die eine Richtung strömen, aus dieser Richtung jedoch nicht zurückströmen kann. Bei einer Rückschlagventileinrichtung handelt es sich im Kontext der vorliegenden Patentanmeldung bevorzugt um ein Bauelement, welches sich vor einer Energiesenkeneinrichtung befindet.

In weiterer Ausgestaltung ist/sind in einem zwischen einem zweiten Ende des bidirektionalen Leitungsabschnitts und der zweiten Energiequelleneinrichtung verlaufenden Leitungsabschnitt der Verbindungsleitungseinrichtung eine Ventileinrichtung, insbesondere in Form eines Sperrventils, und/oder eine Entspannungsvorrichtung und/oder eine Durchflussbegrenzungseinrichtung angeordnet. Zu der Ausgestaltung und Funktionsweise dieser Komponenten wird auf die Ausführungen weiter oben im Rahmen des erfindungsgemäßen Verfahrens Bezug genommen und verwiesen.

In einer bevorzugten Ausführungsform weist das Energiesystem eine Kompressoreinrichtung auf, die in der Verbindungsleitungseinrichtung angeordnet und mit der zweiten Energiequelleneinrichtung verbunden ist, Über die Kompressoreinrichtung wird das von der ersten Energiequelleneirichtung erzeugte Medium, beispielsweise Wasserstoff, in die zweite Energiequelleneinrichtung eingespeichert. Verfügt das Energiesystem über eine zweite Energiesenkeneinrichtung, die als Zwischenspeicher dienst, befindet sich die Kompressoreinrichtung bevorzugt zwischen der zweiten Energiesenkeneinrichtung und der zweiten Energiequelleneirichtung.

Die vorliegende Erfindung lässt sich grundsätzlich auf alle Systeme mit bidirektional genutzter Leitung und druckunabhängig anwenden, insbesondere auf Speichersysteme mit separater Quelle und Senke, bevorzug auf Wasserstoff Speichersysteme. Die vorliegende Erfindung eignet sich für Energiesysteme mit großen Entfernungen zwischen Energiequelleneinrichtung und Energiesenkeneinrichtung, insbesondere auch für Systeme mit innen verlegter und/oderoffen zugänglich verlegter Speicherleitung.

Die Erfindung wird nun anhand eines Ausführungsbeispiels unter Bezugnahme auf die beiliegenden Zeichnungen näher erläutert. Es zeigen

Figur 1 in schematischer Ansicht ein erfindungsgemäßes Energiesystem, in dem das erfindungsgemäße Verfahren ausführbar ist;

Figur 2 den Ablauf des erfindungsgemäßen Verfahrens, wobei eine erste Betriebsweise des Energiesystems dargestellt ist; und

Figur 3 den Ablauf des erfindungsgemäßen Verfahrens, wobei eine zweite Betriebsweise des Energiesystems dargestellt ist.

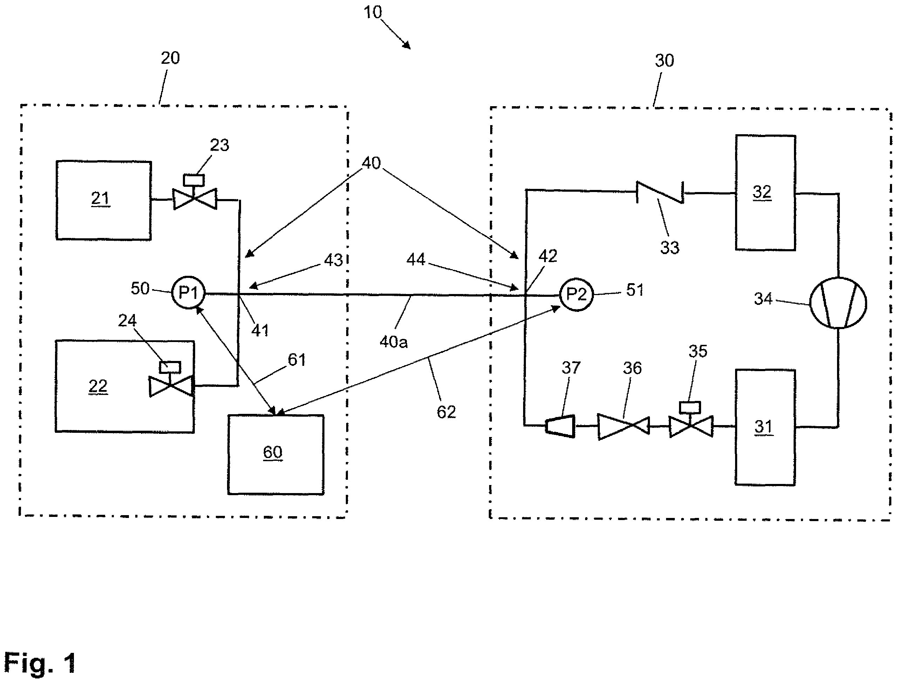

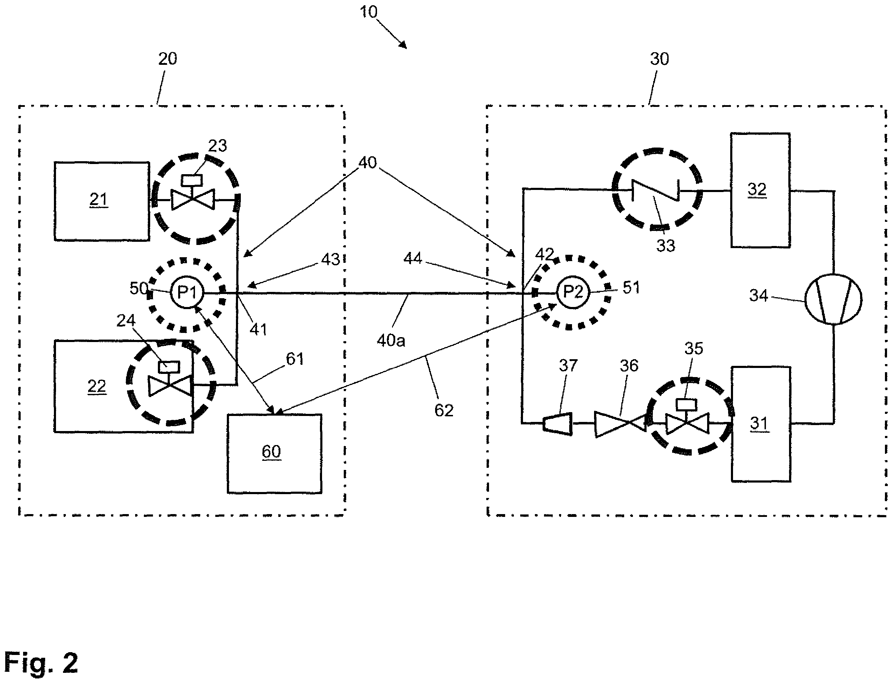

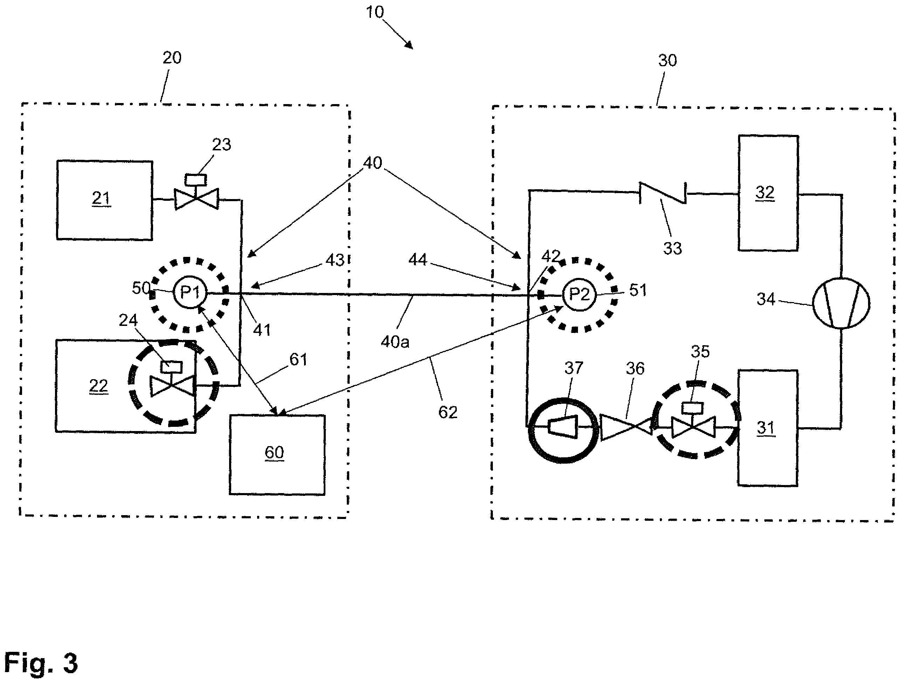

In den Figuren 1 bis 3 ist ein Energiesystem 10 dargestellt, welches als Hausenergiesystem eingesetzt wird. In Figur 1 wird zunächst der grundsätzliche Aufbau des Energiesystems 10 beschrieben. In dem Energiesystem 10 wird das erfindungsgemäße Verfahren zur Leitungsdrucküberwachung ausgeführt. Der Ablauf des Verfahrens in verschiedenen Betriebsweisen des Energiesystems 10 wird anhand der Figuren 2 und 3 erläutert.

Wie aus Figur 1 ersichtlich ist, weist das Energiesystem 10 zunächst ein erstes Untersystem 20 auf, welches als Innensystem ausgebildet ist. Das bedeutet, dass sich das erste Untersystem 20 innerhalb des Hauses befindet. Zusätzlich weist das Energiesystem 10 ein zweites Untersystem 30 in Form eines Außensystems auf. Das bedeutet, dass sich das zweite Untersystem 30 außerhalb des Hauses befindet.

Das erste Untersystem 20 weist eine erste Energiequelleneinrichtung 21 auf, bei der es sich um eine Elektrolyseeinrichtung zur Herstellung von Wasserstoff handelt. Zudem weist das erste Untersystem 20 eine erste Energiesenkeneinrichtung 22 auf, bei der es sich um eine Brennstoffzelleneinrichtung handelt.

Das zweite Untersystem 30 weist eine zweite Energiequelleneinrichtung 31 auf, bei der es sich um eine Hochdruckspeichereinrichtung handelt. In der Hochdruckspeichereinrichtung wird der erzeugte Wasserstoff bei bis zu 700 bar gespeichert. Zusätzlich verfügt das zweite Untersystem 30 über eine zweite Energiesenkeneinrichtung 32 in Form einer Mitteldruckspeichereinrichtung, in der der erzeugte Wasserstoff bei Drücken zwischen 20 und 60 bar zwischengespeichert wird, bevor er von dort endgültig.in der Hochdruckspeichereinrichtung gespeichert wird.

Die einzelnen Komponenten des Energiesystems 10 sind über eine Verbindungsleitungseinrichtung 40 miteinander verbunden, die aus einer Anzahl von Leitungsabschnitten besteht. Wenigstens ein Leitungsabschnitt 40a ist dabei als so genannter bidirektionaler Leitungsabschnitt ausgebildet. Das bedeutet, dass der Leitungsabschnitt 40a während des Betriebs des Energiesystems 10 bidirektional genutzt und in beiden Richtungen durchströmt wird. In dem dargestellten Ausführungsbeispiel verbindet der bidirektionale Leitungsabschnitt 40a die Komponenten des ersten Untersystems 20 mit den Komponenten des zweiten Untersystems 30.

Die erste Energiequelleneinrichtung 21 ist über eine Ventileinrichtung 23 an der Verbindungsleitungseinrichtung 40 angebunden. Die erste Energiesenkeneinrichtung 22 ist über eine Ventileinrichtung 24 an der Verbindungsleitungseinrichtung 40 angebunden. Bei den Ventileinrichtungen 23, 24 handelt es sich bevorzugt um Sperrventile, beispielsweise um Magnetventile.

Wie in Figur 1 dargestellt ist, sind die erste Energiequelleneirichtung 21 und die erste Energiesenkeneinrichtung 22 auf einer ersten Seite 43 des bidirektionalen Leitungsabschnitts 40a an einem ersten Ende 41 des bidirektionalen Leitungsabschnitts 40a angeordnet, während die zweite Energiequelleneinrichtung 31 und die zweite Energiesenkeneinrichtung 32 auf einer zweiten Seite 44 des bidirektionalen Leitungsabschnitts 40a an einem zweiten Ende 42 des bidirektionalen Leitungsabschnitts 40a angeordnet sind.

Der in der ersten Energiequelleneirichtung 21 mittels Elektrolyse hergestellte Wasserstoff verlässt die erste Energiequelleneinrichtung 21 über die Verbindungsleitungseinrichtung 40 und strömt insbesondere über den bidirektionalen Leitungsabschnitt 40a in das zweite Untersystem 30 und dort über eine Rückschlagventileinrichtung 33 in die als Mitteldruckspeicher fungierende zweite Energiesenkeneinrichtung 32. Die zweite Energiesenkeneinrichtung 32 dient als Zwischenspeicher für den Wasserstoff. Da der in der zweiten Energiesenkeneinrichtung 32 zwischengespeicherte Wasserstoff diese nur in einer Richtung verlassen soll, nämlich in Richtung der zweiten Energiequelleneinrichtung 31, ist nur die Rückschlagventileinrichtung 33 vorgesehen. Ein Sperrventil ist deshalb nicht erforderlich.

Über eine Kompressoreinrichtung 34, die insbesondere in Form eines Kolbenkompressors vorliegt, wird der in der zweiten Energiesenkeneinrichtung 32 zwischengespeicherte Wasserstoff in der zweiten Energiequelleneinrichtung 31, bei der es sich um eine Hochdruckspeichereinrichtung handelt, eingespeichert. Über die Kompressoreinrichtung 34 wird der Wasserstoff so weit komprimiert, dass er mit Drücken von bis zu 700 bar in der zweiten Energiequelleneinrichtung 31 eingespeichert werden kann.

Der in der zweiten Energiequelleneinrichtung 31 gespeicherte Wasserstoff wird für den Betrieb der ersten Energiesenkeneinrichtung 22 in Form der Brennstoffzelleneinrichtung verwendet. Die Brennstoffzelleneinrichtung kann aber nur bei Drücken kleiner 20 bar arbeiten. Deshalb wird der in der zweiten Energiequelleneirichtung 31 in Form der Hochdruckspeichereinrichtung gespeicherte Wasserstoff aus der zweiten Energiequelleneirichtung 31 entnommen, über eine Ventileinrichtung 35 geführt, bei der es sich um ein Sperrventil, insbesondere um ein Magnetventil handeln kann, und einer Entspannungseinrichtung 36 in Form eines Druckminderers zugeführt. Anschließend kann der Wasserstoff insbesondere noch eine Durchflussbegrenzungseinrichtung 37 durchströmen, die bevorzugt als eine Einrichtung zur Leitungsquerschnittreduzierung ausgebildet ist. Hierbei handelt es sich beispielsweise um ein Kapillarrohr. Mittels der Durchflussbegrenzungseinrichtung 37 wird die Sensitivität des in den Figuren 2 und 3 beschriebenen erfindungsgemäßen Verfahrens verbessert. Von dort wird der druck reduzierte Wasserstroff über die Verbindungsleitungseinrichtung 40, und hier insbesondere auch über den bidirektionalen Leitungsabschnitt 40a der ersten Energiesenkeneinrichtung 22 in Form der Brennstoffzelleneinrichtung zugeführt und dort verbraucht.

Zur Messung des Drucks sind an den jeweiligen Enden 41, 42 des bidirektionalen Leitungsabschnitts 40a zwei Druckmesseinrichtungen 50, 51, beispielsweise in Form von Drucksensoren, vorgesehen. Die Druckmesseinrichtungen 50, 51 sind räumlich voneinander getrennt, wobei sich die erste Druckmesseinrichtung 50 am ersten Ende 41 des bidirektionalen Leitungsabschnitts befindet, während sich die zweite Druckmesseinrichtung 51 am zweiten Ende 42 des bidirektionalen Leitungsabschnitts 40a befindet. Die Druckmesseinrichtung 50 am ersten Ende des bidirektionalen Leitungsabschnitts 40a erfasst einen ersten Druck P1, während die zweite Druckmesseinrichtung 51 am zweiten Ende 42 des bidirektionalen Leitungsabschnitts 40a einen zweiten Druck P2 erfasst.

Das erfindungsgemäße Verfahren zur Überprüfung des Leitungsdrucks in dem bidirektionalen Leitungsabschnitt 40a, welches später anhand der Figuren 2 und 3 erläutert wird, sieht vor, dass die erfassten Drücke P1 und P2 ausgewertet werden. Dies geschieht bevorzugt in einer Steuereinrichtung 60, die im Ausführungsbeispiel dem ersten Untersystem 20 zugeordnet ist. Natürlich kann sich die Steuereinrichtung 60 auch anderswo befinden. Die Steuereinrichtungen 60 ist über entsprechende Schnittstellen 61, 62 mit den Druckmesseinrichtungen 50, 51 zumindest zeitweilig verbunden, was durch entsprechende Pfeile dargestellt ist. In der Steuereinrichtung 60 findet eine Überprüfung des Leitungsdrucks in dem bidirektionalen Leitungsabschnitt 40a mittels einer Auswertung der durch die Druckmesseinrichtungen 50, 51 erfassten Drücke P1, und P2 statt, indem die erfassten Drücke P1 und P2 in Relation zueinander gesetzt werden. Durch das erfindungsgemäße Verfahren wird insbesondere überprüft, ob die bidirektionale Leitungsabschnitt 40a eine Leckage aufweist.

Das in den Figuren 1 bis 3 dargestellte Energiesystem 10 stellt einen Teilbereich eines Gesamt-Hausenergiesystems dar, bei dem es sich um ein elektrisch autarkes und vollständig auf erneuerbaren Energien beruhendes multihybrides Hausenergiespeichersystem handelt.

Das multihybride Hausenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei agiert das System als Inselsystem unabhängig vom elektrischen Netz. Vielmehr soll die Anlage die elektrische Autarkie des Hauses gewährleisten, sodass über das ganze Jahr hinweg keine elektrische Energie aus dem Stromnetz bezogen werden muss.

Die primäre Aufgabe des Hausenergiesystems ist es, die gewonnene elektrische Energie aus Photovoltaik (PV)-Modulen oder dergleichen dem Verbraucher im Haushalt verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Wohnraumlüftung durch ein verbautes Lüftungsgerät.

Der in der Elektrolyseeinrichtung produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann die Brennstoffzelleinnrichtung den zusätzlichen elektrischen Energiebedarf decken. Im Brennstoffzellenbetrieb fließt der Wasserstoff über die Wasserstoffleitung aus der Druckspeicheranlage zur Brennstoffzelleneinrichtung.

Ein zeitgleicher Betrieb von Brennstoffzelleneinrichtung und Elektrolyseeinrichtung ist ausgeschlossen. Das gesamte System wird zentral über einen Energy Manager mit einem prädiktiven Energiemanagement betrieben.

Das zweite Untersystem ist prinzipiell für den Betrieb im Außenbereich vorgesehen, kann aber unter bestimmten Bedingungen auch innerhalb eines speziellen Bereichs des Hauses errichtet und betrieben werden.

Anhand der Figuren 2 und 3 wird nachfolgend der Ablauf des erfindungsgemäßen Verfahrens verdeutlicht. Dabei sind in den Figuren 2 und 3 jeweils unterschiedliche Betriebsweisen, das heißt unterschiedliche Betriebszustände, des Energiesystems 10 dargestellt.

Bei der in Figur 2 gezeigten Darstellung des in Figur 1 allgemein beschriebenen Energiesystems 10 befindet sich das Energiesystem 10 in einem ersten Betriebszustand, bei dem es sich um den Ruhezustand handeln soll. Bei der Leitungsdrucküberwachung im Ruhezustand soll es keinen Volumenstrom in der Verbindungsleitungseinrichtung 40, und insbesondere in dem bidirektionalen Leitungsabschnitt 40a geben. Dazu sind die Ventileinrichtungen 23, 24, und 35 geschlossen. Die Rückschlagventileinrichtung 33 lässt ohnehin keinen Rückfluss zu. Das Leitungsvolumen ist durch die entsprechende Stellung der Ventileinrichtungen, die durch fett und gestrichelt markierte Kreise kenntlich gemacht sind, minimiert. Geringe und starke Leckagen in dem bidirektionalen Leitungsabschnitt 40a werden gleichermaßen gut durch die Druckmesseinrichtungen 50, 51 erfasst, beispielsweise durch das Erkennen einer Grenzdruckunterschreitung. Dies ist in Figur 2 durch die fett und gepunktet dargestellten Kreise kenntlich gemacht. Fehler in den Druckmesseinrichtungen 50, 51 können beispielsweise durch Plausibilitätsprüfungen ausgeschlossen werden. Die Auswertung der von den Druckmesseinrichtungen 50, 51 erfassten Drücke P1 und P2, insbesondere in der Steuereinrichtung 60, erfolgt bevorzugt in der in der allgemeinen Beschreibung der Erfindung weiter oben geschilderten Weise.

Bei der in Figur 3 gezeigten Darstellung des in Figur 1 allgemein beschriebenen Energiesystems 10 befindet sich das Energiesystem 10 in einem zweiten Betriebszustand, bei dem es sich um einen Betriebszustand handeln soll. Dargestellt ist der Betriebszustand Brennstoffzellenbetrieb. Für den Betriebszustand Herstellung von Wasserstoff im Elektrolysebetrieb gilt Ähnliches. Die Leitungsdrucküberwachung in dem bidirektionalen Leitungsabschnitt 40a im Brennstoffzellenbetrieb erfolgt bei geöffneter Ventileinrichtung 24 der zweiten Energiesenkeneinrichtung 22 sowie bei geöffneter Ventileinrichtung 35 der zweiten Energiequelleneinrichtung 31, die durch fett und gestrichelt dargestellte Kreise markiert sind. In der Verbindungsleitungseinrichtung 40, und insbesondere in dem bidirektionalen Leitungsabschnitt 40a herrscht somit ein Volumenstrom, der größer Null ist. Der in der zweiten Energiequelleneinrichtung 31 gespeicherte Wasserstoff kann somit, unter anderem über den bidirektionalen Leitungsabschnitt 40a, in die erste Energiesenkeneinrichtung 22 in Form der Brennstoffzelleinrichtung strömen. Leichte beziehungsweise Teilleckagen in dem bidirektionalen Leitungsabschnitt 40a führen zu einer Druckdifferenz zwischen den Drücken P1 und P2, die durch die Druckmesseinrichtungen 50, 51 erfasst werden, was durch die fett und gepunktet dargestellten Kreise kenntlich gemacht ist. Die Druckdifferenz kommt dadurch zustande, dass bei einer Leckage in dem bidirektionalen Leitungsabschnitt 40a auf Seiten der zweiten Energiequelleneinrichtung 31, das heißt der Druck P2, langsam beziehungsweise gar nicht abfällt. Der Druck auf der Seite der ersten Energiesenkeneinrichtung 22, das heißt der Druck P1, der wegen der Anordnung der Druckmesseinrichtung 50 hinter der Leckage in dem bidirektionalen Leitungsabschnitt 40a liegt, fällt hingegen ab, da weiterhin Wasserstoff verbraucht wird und über die Leckage in dem bidirektionalen Leitungsabschnitt 40a abströmen kann. Starke Leckagen beziehungsweise ein Leitungsabriss kann gegebenenfalls auch durch eine Grenzdruckunterschreitung erfasst werden, was durch die fett und gepunktet dargestellten Kreise kenntlich gemacht ist. Die Sensitivität des Verfahrens kann durch eine Reduzierung des Durchflusses mittels der Durchflussbegrenzungseinrichtung 37, bei der es sich beispielsweise um ein Kapillarrohr handelt, verbessert werden. Dies ist in Figur 3 durch den fett markierten Kreis kenntlich gemacht. Fehler in den Druckmesseinrichtungen 50, 51 können beispielsweise durch Plausibilitätsprüfungen ausgeschlossen werden. Die Auswertung der von den Druckmesseinrichtungen 50, 51 erfassten Drücke P1 und P2, insbesondere in der Steuereinrichtung 60, erfolgt bevorzugt in der in der allgemeinen Beschreibung der Erfindung weiter oben geschilderten Weise.

**Bezugszeichenliste**

| | |
|---|---|
| 10 | Energiesystem (Hausenergiesystem) |
| 20 | Erstes Untersystem (Innensystem) |
| 21 | Erste Energiequelleneinrichtung (Elektrolyseeinrichtung) |
| 22 | Erste Energiesenkeneinrichtung (Brennstoffzelleneinrichtung) |
| 23 | Ventileinrichtung |
| 24 | Ventileinrichtung |
| 30 | Zweites Untersystem (Außensystem) |
| 31 | Zweite Energiequelleneinrichtung (Hochdruckspeichereinrichtung) |
| 32 | Zweite Energiesenkeneinrichtung (Mitteldruckspeichereinrichtung) |
| 33 | Rückschlagventileinrichtung |
| 34 | Kompressoreinrichtung |
| 35 | Ventileinrichtung |
| 36 | Entspannungsvorrichtung (Druckminderer) |
| 37 | Durchflussbegrenzungseinrichtung (Kapillarrohr) |
| 40 | Verbindungsleitungseinrichtung |
| 40a | Bidirektionaler Leitungsabschnitt |
| 41 | Erstes Ende des bidirektionalen Leitungsabschnitts |
| 42 | Zweites Ende des bidirektionalen Leitungsabschnitts |
| 43 | Erste Seite des bidirektionalen Leitungsabschnitts |
| 44 | Zweite Seite des bidirektionalen Leitungsabschnitts |
| 50 | Erste Druckmesseinrichtung |
| 51 | Zweite Druckmesseinrichtung |
| 60 | Steuereinrichtung |
| 61 | Schnittstelle |
| 62 | Schnittstelle |
| P1 | Erster Druck |
| P2 | Zweiter Druck |

**Patentansprüche**

1. Verfahren zur Leitungsdrucküberwachung in einem bidirektional genutzten Leitungsabschnitt (40a) einer Verbindungsleitungseinrichtung (40) in einem Energiesystem (10), insbesondere in einem Hausenergiesystem, wobei sich auf der ersten Seite (43) des bidirektionalen Leitungsabschnitts (40a) eine erste Energiequelleneinrichtung (21) und eine erste Energiesenkeneinrichtung (22) befinden und wobei sich auf der zweiten Seite (44) des bidirektionalen Leitungsabschnitts (40a) eine zweite Energiequelleneinrichtung (31) und eine zweite Energiesenkeneinrichtung (32) befinden, **dadurch gekennzeichnet, dass** über zwei Druckmesseinrichtungen (50, 51), die sich räumlich getrennt voneinander in dem bidirektionalen Leitungsabschnitt (40a) befinden, ein an den Orten der Druckmesseinrichtungen (50, 51) herrschender erster Druck (P1) und ein zweiter Druck (P2) erfasst werden, und dass eine Überprüfung des Leitungsdrucks in dem bidirektionalen Leitungsabschnitt (40a) mittels einer Auswertung der durch die Druckmesseinrichtungen (50, 51) erfassten Drücke (P1, P2) erfolgt, indem die erfassten Drücke (P1, P2) in Relation zueinander gesetzt werden.

2. Verfahren nach Anspruch 1, **gekennzeichnet durch** folgende Schritte: a) über die zwei Druckmesseinrichtungen (50, 51), die sich räumlich getrennt voneinander an einem ersten Ende (41) und an einem zweiten Ende (42) des bidirektionalen Leitungsabschnitts (40a) befinden, werden ein an dem ersten Ende (41) des bidirektionalen Leitungsabschnitts (40a) herrschender erster Druck (P1) und ein an dem zweiten Ende (42) des bidirektionalen Leitungsabschnitts (40a) herrschender zweiter Druck (P2) erfasst; b) die an den beiden Enden (41, 42) des bidirektionalen Leitungsabschnitts (40a) erfassten ersten und zweiten Drücke (P1, P2) werden ausgewertet, indem diese in Relation zueinander gesetzt werden; c) auf Basis der Auswertung wird der in dem bidirektionalen Leitungsabschnitt (40a) herrschende Druck überprüft.

3. Verfahren nach Anspruch 1 oder 2, **dadurch gekennzeichnet, dass** die Auswertung der durch die Druckmesseinrichtungen (50, 51) erfassten Drücke (P1, P2) durch eine Grenzdrucküberwachung erfolgt, indem der erste Druck (P1) und/oder zweite Druck (P2), gegen einen vorgegebenen Grenzdruck verglichen wird/werden.

4. Verfahren nach einem der Ansprüche 1 bis 3, **dadurch gekennzeichnet, dass** die Auswertung der durch die Druckmesseinrichtungen (50, 51) erfassten Drücke (P1, P2) durch einen Quervergleich erfolgt, indem die Werte des ersten Drucks (P1) und des zweiten Drucks (P2) voneinander subtrahiert werden, und indem überprüft wird, wie sich die Differenz der Druckwerte im Vergleich zu einem vorgegebenen Vergleichs-Differenzdruckwert oder Vergleichs-Differenzdruckwertbereich verhält.

5. Verfahren nach einem der Ansprüche 1 bis 4, **dadurch gekennzeichnet, dass** die Auswertung der durch die Druckmesseinrichtungen (50, 51) erfassten Drücke (P1, P2) durch einen Plausibilitätsvergleich erfolgt, indem die Werte des ersten Drucks (P1) und des zweiten Drucks (P2) voneinander subtrahiert werden, und indem überprüft wird, wie sich die Differenz der Druckwerte im Vergleich zu einem vorgegebenen Plausibilitätsdruck-Differenzdruckwert oder Plausibilitäts-Differenzdruckbereich verhält.

6. Verfahren nach einem der Ansprüche 1 bis 5, **dadurch gekennzeichnet, dass** zur Erhöhung der Sensitivität der Leitungsdrucküberwachung der Volumenstrom in dem bidirektionalen Leitungsabschnitt (40a) begrenzt ist, oder dass während des Überwachungsvorgangs der Volumenstrom in dem bidirektionalen Leitungsabschnitt (40a) eingestellt wird.

7. Verfahren nach einem der Ansprüche 1 bis 6, **dadurch gekennzeichnet, dass** das Verfahren in einem ersten Betriebszustand des Energiesystems (10) durchgeführt wird, in dem sich das Energiesystem (10) im Ruhezustand befindet, in welchem der Volumenstrom in dem bidirektionalen Leitungsabschnitt (40a) Null ist.

8. Verfahren nach einem der Ansprüche 1 bis 7, **dadurch gekennzeichnet, dass** das Verfahren in wenigstens einem zweiten Betriebszustand des Energiesystems (10) durchgeführt wird, in dem sich das Energiesystem (10) im Betriebszustand befindet, in welchem der Volumenstrom in dem bidirektionalen Leitungsabschnitt (40a) größer Null ist.

9. Verfahren nach einem der Ansprüche 1 bis 8, **dadurch gekennzeichnet, dass**, wenn auf Basis der Auswertung festgestellt wird, dass der bidirektionale Leitungsabschnitt (40a) eine Leckage aufweist, der Volumenstrom in dem bidirektionalen Leitungsabschnitt (40a) unterbunden wird, oder der Durchfluss des Volumenstroms in dem bidirektionalen Leitungsabschnitt (40a) begrenzt wird.

10. Energiesystem (10), aufweisend eine erste Energiequelleneinrichtung (21) und eine erste Energiesenkeneinrichtung (22), die auf einer ersten Seite (43) eines bidirektional genutzten Leitungsabschnitts (40a) einer Verbindungsleitungseinrichtung (40) angeordnet sind, sowie weiterhin aufweisend eine zweite Energiequelleneinrichtung (31) und eine zweite Energiesenkeneinrichtung (32), die auf einer zweiten Seite (44) des bidirektional genutzten Leitungsabschnitts (40a) der Verbindungsleitungseinrichtung (40) angeordnet sind, weiterhin aufweisend zwei Druckmesseinrichtungen (50, 51), die sich räumlich getrennt voneinander in dem bidirektionalen Leitungsabschnitt (40a) befinden, und die derart bereitgestellt sind, dass sie in der Lage sind, einen an den Orten der Druckmesseinrichtungen (50, 51) herrschenden ersten Druck (P1) und einen zweiten Druck (P2) zu erfassen, sowie weiterhin aufweisend eine Einrichtung, die über eine Schnittstelle (61, 62) zumindest zeitweilig mit den beiden Druckmesseinrichtungen (50, 51) verbunden ist, die derart bereitgestellt ist, dass sie in der Lage ist, die von den Druckmesseinrichtungen (50, 51) erfassten oder ermittelten ersten und zweiten Drücke (P1, P2) auszuwerten und auf Basis der Auswertung den Leitungsdruck zu überprüfen.

11. Energiesystem nach Anspruch 10, **dadurch gekennzeichnet, dass** dieses Mittel zur Durchführung des Verfahrens nach eine der Ansprüche 1 bis 10 aufweist.

12. Energiesystem nach Anspruch 10 oder 11, **dadurch gekennzeichnet, dass** die erste Energiequelleneinrichtung (21) als Elektrolyseeinrichtung zur Herstellung von Wasserstoff ausgebildet ist und/oder dass die erste Energiesenkeneinrichtung (22) als Brennstoffzelleneinrichtung ausgebildet ist und/oder dass die zweite Energiequelleneinrichtung (31) als Hochdruckspeichereinrichtung zur Speicherung von Wasserstoff ausgebildet ist und/oder dass die zweite Energiesenkeneinrichtung (32) als Mitteldruckspeichereinrichtung zur Zwischenspeicherung von Wasserstoff ausgebildet ist.

13. Energiesystem nach einem der Ansprüche 10 bis 12, **dadurch gekennzeichnet, dass** die erste Energiequelleneinrichtung (21) und/oder die erste Energiesenkeneinrichtung (22) über eine Ventileinrichtung (23, 24) an der Verbindungsleitungseinrichtung (40) angeschlossen sind.

**14.** Energiesystem nach einem der Ansprüche 10 bis 13, **dadurch gekennzeichnet, dass** in einem zwischen einem zweiten Ende (42) des bidirektionalen Leitungsabschnitts (40a) und der zweiten Energiesenkeneinrichtung (32) verlaufenden Leitungsabschnitt der Verbindungsleitungseinrichtung (40) eine Ventileinrichtung angeordnet ist.

**15.** Energiesystem nach einem der Ansprüche 10 bis 14, **dadurch gekennzeichnet, dass** in einem zwischen einem zweiten Ende (42) des bidirektionalen Leitungsabschnitts (40a) und der zweiten Energiequelleneinrichtung (31) verlaufenden Leitungsabschnitt der Verbindungsleitungseinrichtung (40) eine Ventileinrichtung (35) und/oder eine Entspannungsvorrichtung (36) und/oder eine Durchflussbegrenzungseinrichtung (37) angeordnet ist/sind.

**Claims**

**1.** A method for line pressure monitoring in a bidirectionally used line section (40a) of a connecting line device (40) in an energy system (10), in particular in a home energy system, wherein a first energy source device (21) and a first energy sink device (22) are provided on the first side (43) of the bidirectional line section (40a), and wherein a second energy source device (31) and a second energy sink device (32) are provided on the second side (44) of the bidirectional line section (40a), **characterized in that** by means of two pressure measuring devices (50, 51), which are provided spatially separated from one another in the bidirectional line section (40a), a first pressure (P1) and a second pressure (P2) prevailing at the locations of the pressure measuring devices (50, 51) are detected, and **in that** a check of the line pressure in the bidirectional line section (40a) is carried out by means of an evaluation of the pressures (P1, P2) detected by the pressure measuring devices (50, 51), by setting the detected pressures (P1, P2) in relation to one another.

**2.** The method according to claim 1, **characterized by** the following steps: a) via the two pressure measuring devices (50, 51), which are located spatially separated from one another at a first end (41) and at a second end (42) of the bidirectional line section (41a), a first pressure (P1) prevailing at the first end (41) of the bidirectional line section (41a) and a second pressure (P2) prevailing at the second end (42) of the bidirectional line section (41a) are detected; b) the first and second pressures (P1, P2) detected at the two ends (41, 42) of the bidirectional line section (40a) are evaluated, in that they are set in relation to one another; c) the pressure prevailing in the bidirectional line section (40a) is checked on the basis of the evaluation.

**3.** The method according to claim 1 or 2, **characterized in that** the evaluation of the pressures (P1, P2) detected by the pressure measuring devices (50, 51) is carried out by means of a limit pressure monitoring, **in that** the first pressure (P1) and/or the second pressure (P2) is/are compared against a predetermined limit pressure.

**4.** The method according to anyone of Claims 1 to 3, **characterized in that** the evaluation of the pressures (P1, P2) detected by the pressure measuring devices (50, 51) is carried out by a transverse comparison, **in that** the values of the first pressure (P1) and of the second pressure (P2) are subtracted from one another, and **in that** a check is made as to how the difference of the pressure values behaves in comparison with a predetermined comparison differential pressure value or comparison differential pressure value range.

**5.** The method according to anyone of Claims 1 to 4, **characterized in that** the evaluation of the pressures (P1, P2) detected by the pressure measuring devices (50, 51) is carried out by means of a plausibility comparison **in that** the values of the first pressure (P1) and of the second pressure (P2) are subtracted from one another, and **in that** a check is made as to how the difference of the pressure values behaves in comparison with a predetermined plausibility pressure differential pressure value or plausibility differential pressure range.

**6.** The method according to anyone of Claims 1 to 5, **characterized in that**, in order to increase the sensitivity of the line pressure monitoring, the volume flow is limited in the bidirectional line section (40a), or **in that** during the monitoring process, the volume flow in the bidirectional line section (40a) is adjusted.

**7.** The method according to anyone of Claims 1 to 6, **characterized in that** the method is carried out in a first operating mode of the energy system (10), in which the energy system (10) is in the idle state, in which the volume flow in the bidirectional line section (40a) is zero.

**8.** The method according to anyone of Claims 1 to 7, **characterized in that** the method is carried out in at least one second operating mode of the energy system (10), in which the energy system (10) is in the operating state, in which the volume flow in the bidirectional line section (40a) is greater than zero.

**9.** The method according to anyone of Claims 1 to 8, **characterized in that**, if it is determined on the basis of the evaluation that the bidirectional line section (40a) has a leakage, the volume flow in the bidirectional line section (40a) is stopped, or the flow rate of the volume flow in the bidirectional line section (40a), is limited.

**10.** An energy system (10), comprising a first energy source device (21) and a first energy sink device (22), which are provided on a first side (43) of a bidirectionally used line section (40a) of a connecting line device (40), and further comprising a second energy source device (31) and a second energy sink device (32), which are provided on a second side (44) of the bidirectionally used line section (40a) of the connecting line device (40), further comprising two pressure measuring devices (50, 51), which are provided spatially separated from one another in the bidirectional line section (40a), and which are provided in such a way that they are capable of detecting a first pressure (P1) and a second pressure (P2) prevailing at the locations of the pressure measuring devices (50, 51), and further comprising a device, which is connected at least temporarily to the two pressure measuring devices (50, 51) via an interface (61, 62), said device being provided in such a way that it is capable of evaluating the first and second pressures (P1, P2) detected or determined by the pressure measuring devices (50, 51), and to check the line pressure on the basis of the evaluation.

**11.** The energy system according to Claim 10, **characterized in that** it comprises means for carrying out the method according to anyone of Claims 1 to 10.

**12.** The energy system according to Claim 10 or 11, **characterized in that** the first energy source device (21) is configured as an electrolysis device for producing hydrogen, and/or **in that** the first energy sink device (22) is configured as a fuel cell device and/or **in that** the second energy source device (31) is configured as a highpressure storage device for storing hydrogen, and/or **in that** the second energy sink device (32) is configured as medium-pressure storage device for intermediate storage of hydrogen.

**13.** The energy system according to anyone of Claims 10 to 12, **characterized in that** the first energy source device (21) and/or the first energy sink device (22) are connected to the connecting line device (40) via a valve device (23. 24).

**14.** The energy system according to anyone of Claims 10 to 13, **characterized in that** a valve device is arranged in a line section of the connecting line device (40) extending between a second end (42) of the bidirectional line section (40a) and the second energy sink device (32).

**15.** The energy system according to anyone of Claims 10 to 14, **characterized in that** a valve device (35), and/or an expansion device (36), and/or a flow limiting device (37) is/are arranged in a line section of the connecting line device (40) extending between a second end (42) of the bidirectional line section (40a) and the second energy source device (31).

## Revendications

**1.** Procédé de surveillance de pression de ligne dans un segment de ligne (40a) utilisé de manière bidirectionnelle d'un appareil de ligne de connexion (40) dans un système d'énergie (10), en particulier dans un système d'énergie domestique, dans lequel un premier appareil de source d'énergie (21) et un premier appareil de puits d'énergie (22) se trouvent sur le premier côté (43) du segment de ligne bidirectionnel (40a) et dans lequel un second appareil de source d'énergie (31) et un second appareil de puits d'énergie (32) se trouvent sur le second côté (44) du segment de ligne bidirectionnel (40a), **caractérisé en ce qu'**une première pression (P1) et une seconde pression (P2) régnant aux endroits des appareils de mesure de pression (50, 51) sont détectées par l'intermédiaire de deux appareils de mesure de pression (50, 51) qui se trouvent spatialement séparés l'un de l'autre dans le segment de ligne (40a) bidirectionnel, et **en ce qu'**un contrôle de la pression de ligne dans le tronçon de ligne bidirectionnel (40a) est effectué au moyen d'une évaluation des pressions (P1, P2) détectées par les appareils de mesure de pression (50, 51), en mettant les pressions détectées (P1, P2) en relation les unes avec les autres.

**2.** Procédé selon la revendication 1, **caractérisé par** les étapes suivantes : a) par l'intermédiaire des deux appareils de mesure de pression (50, 51) qui se trouvent spatialement séparés l'un de l'autre à une première extrémité (41) et à une seconde extrémité (42) du segment de ligne (40a) bidirectionnel, une première pression (P1) régnant à la première extrémité (41) du segment de ligne (40a) bidirectionnel et une seconde pression (P2) régnant à la seconde extrémité (42) du segment de ligne (40a) bidirectionnel sont détectées : b) les première et seconde pressions (P1, P2) détectées aux deux extrémités (41, 42) du segment de ligne bidirectionnel (40a) sont évaluées en les mettant en relation l'une avec l'autre ; c) la pression régnant dans le segment de ligne bidirectionnel (40a) est vérifiée sur la base de l'évaluation.

**3.** Procédé selon la revendication 1 ou 2, **caractérisé en ce que** l'évaluation des pressions (P1, P2) détectées par les appareils de mesure de pression (50, 51) s'effectue par une surveillance de la pression limite, **en ce que** la première pression (P1) et/ou la seconde pression (P2) est/sont comparées à une pression limite prédéfinie.

4. Procédé selon l'une quelconque des revendications 1 à 3, **caractérisé en ce que** l'évaluation des pressions (P1, P2) détectées par les appareils de mesure de pression (50, 51) s'effectue par une comparaison transversale, en soustrayant l'une de l'autre les valeurs de la première pression (P1) et de la seconde pression (P2), et en vérifiant comment se comporte la différence des valeurs de pression par rapport à une valeur de pression différentielle de comparaison ou une plage de valeurs de pression différentielle de comparaison prédéterminée.

5. Procédé selon l'une quelconque des revendications 1 à 4, **caractérisé en ce que** l'évaluation des pressions (P1, P2) détectées par les appareils de mesure de pression (50, 51) s'effectue par une comparaison de plausibilité, en soustrayant l'une de l'autre les valeurs de la première pression (P1) et de la seconde pression (P2), et en vérifiant comment se comporte la différence des valeurs de pression par rapport à une valeur de pression différentielle de plausibilité ou à une plage de pression différentielle de plausibilité prédéterminée.

6. Procédé selon l'une quelconque des revendications 1 à 5, **caractérisé en ce que**, pour augmenter la sensibilité de la surveillance de pression de ligne, le débit volumique dans le segment de ligne (40a) bidirectionnel est limité, ou **en ce que**, pendant le processus de surveillance, le débit volumique dans le segment de ligne (40a) bidirectionnel est réglé.

7. Procédé selon l'une quelconque des revendications 1 à 6, **caractérisé en ce que** le procédé est mis en oeuvre dans un premier état de fonctionnement du système d'énergie (10), dans lequel le système d'énergie (10) est au repos, dans lequel le débit volumique dans le segment de ligne (40a) bidirectionnel est nul.

8. Procédé selon l'une quelconque des revendications 1 à 7, **caractérisé en ce que** le procédé est mis en oeuvre dans au moins un second état de fonctionnement du système d'énergie (10) dans lequel le système d'énergie (10) est dans l'état de fonctionnement dans lequel le débit volumique dans le segment de ligne (40a) bidirectionnel est supérieur à zéro.

9. Procédé selon l'une quelconque des revendications 1 à 8, **caractérisé en ce que**, lorsqu'il est déterminé, sur la base de l'évaluation, que le segment de ligne (40a) bidirectionnel présente une fuite, le débit volumétrique dans le segment de ligne (40a) bidirectionnel est arrêté, ou le débit du débit volumétrique dans le segment de ligne (40a) bidirectionnel est limité.

10. Système d'énergie (10) présentant un premier appareil de source d'énergie (21) et un premier appareil de dissipation d'énergie (22) agencés sur un premier côté (43) d'un segment de ligne (40a) utilisé de manière bidirectionnelle d'un appareil de ligne de connexion (40), et présentant en outre un second appareil de source d'énergie (31) et un second appareil de dissipation d'énergie (32), qui sont agencés sur un second côté (44) du segment de ligne (40a) utilisé de manière bidirectionnelle de l'appareil de ligne de connexion (40), présentant en outre deux appareils de mesure de pression (50, 51) qui sont spatialement séparés l'un de l'autre dans le segment de ligne (40a) bidirectionnel, et qui sont prévus de manière à pouvoir détecter une première pression (P1) et une seconde pression (P2) régnant aux endroits des appareils de mesure de pression (50, 51), et présentant en outre un appareil qui peut être connecté par une interface (61, 62) au moins temporairement aux deux appareils de mesure de pression (50, 51), qui est prévu de telle sorte qu'il est en mesure d'évaluer les première et seconde pressions (P1, P2) détectées ou déterminées par les appareils de mesure de pression (50, 51) et de vérifier la pression de ligne sur la base de l'évaluation.

11. Système énergétique selon la revendication 10, **caractérisé en ce qu'**il présente des moyens pour la mise en oeuvre du procédé selon l'une quelconque des revendications 1 à 10.

12. Système énergétique selon la revendication 10 ou 11, **caractérisé en ce que** le premier appareil de source d'énergie (21) est conçu comme un appareil d'électrolyse pour la production d'hydrogène et/ou **en ce que** le premier appareil de puits d'énergie (22) est conçu comme un appareil de pile à combustible et/ou **en ce que** le second appareil de source d'énergie (31) est conçu comme un appareil de stockage à haute pression pour le stockage d'hydrogène et/ou **en ce que** le second appareil de puits d'énergie (32) est conçu comme un appareil de stockage à moyenne pression pour le stockage intermédiaire d'hydrogène.

13. Système énergétique selon l'une quelconque des revendications 10 à 12, **caractérisé en ce que** le premier appareil de source d'énergie (21) et/ou le premier appareil de réduction d'énergie (22) sont connectés à l'appareil de ligne de connexion (40) par l'intermédiaire d'un appareil de vanne (23, 24).

14. Système d'énergie selon l'une quelconque des revendications 10 à 13, **caractérisé en ce qu'**un appareil de vanne est agencé dans un segment de ligne de l'appareil de ligne de connexion (40) s'étendant entre une seconde extrémité (42) du segment de ligne (40a) bidirectionnel et le second appareil de dissipation d'énergie (32).

**15.** Système d'énergie selon l'une quelconque des revendications 10 à 14, **caractérisé en ce qu'**un appareil de vanne (35) et/ou un appareil de détente (36) et/ou un appareil de limitation de débit (37) est/sont agencé(s) dans un segment de ligne de l'appareil de ligne de connexion (40) s'étendant entre une seconde extrémité (42) du segment de ligne bidirectionnel (40a) et le second appareil de source d'énergie (31).

10
20
21
22
23
24
40
41
43
50
P1
60
61
30
31
32
33
34
35
36
37
42
44
40a
51
P2
62

Fig. 1

10
20
30
21
22
23
24
31
32
33
34
35
36
37
40
40a
41
42
43
44
P1
50
P2
51
60
61
62


Fig. 2

10
20
21
22
23
24
30
31
32
33
34
35
36
37
40
40a
41
42
43
44
50
51
60
61
62
P1
P2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10307112 A1
- DE 102015209875 A1
- DE 112006001772 T5
- DE 112005000673 B4
- WO 2017089468 A1
- WO 2017089469 A1